# EUROPÄISCHE PATENTANMELDUNG

(11) **EP 0 703 101 A1**
(43) Veröffentlichungstag der Anmeldung: **27.03.1996**
(21) Anmeldenummer: 95113891.6
(22) Anmeldetag: 05.09.1995
(51) Int. Cl.: B60B 33/02, B62B 3/10

(54) **Von Hand bewegbarer Transportwagen**

(30) Priorität: 15.09.1994 DE 9415017 U
(71) Anmelder: WANZL METALLWARENFABRIK GMBH, D-89336 Leipheim (DE)
(72) Erfinder: Blaha, Martin, D-89335 Ichenhausen (DE)

(57) **Zusammenfassung**

Die Erfindung betrifft einen von Hand bewegbaren Transportwagen (1), der mit wenigstens drei Lenkrollen (6) ausgestattet ist, wovon mindestens eine dieser Lenkrollen (6) als Lenk-Bockrolle (7) gestaltet ist, die eine auf dem Rücken (10) ihrer Radgabel (8) befindliche Einrichtung (17) aufweist, die das in der Radgabel (8) gelagerte Rad (12) der Lenk-Bockrolle (7) dann in Geradeausfahrt hält, wenn sich ein federbelastetes Rastteil (22) der Einrichtung (17) in Eingriff mit einer außerhalb der Einrichtung (17) befindlichen Vertiefung (24) befindet, wobei das Rastteil (22) durch einen quer zur Geradeausfahrt gerichteten, auf den Transportwagen (1) einwirkenden Druck aus der Vertiefung (24) herausdrückbar ist, so daß sich die Radgabel (8) der wenigstens einen Lenk-Bockrolle (7) verschwenken läßt und wobei das Rastteil (22) von selbst wieder in die Vertiefung (24) einrastet, wenn das Rad (12) erneut eine in Geradeausfahrt gerichtete Position einnimmt.
Das Wesen der Erfindung besteht darin, daß sich die Vertiefung (24) in einem ortsfesten, nicht zur Lenk-Bockrolle (7) gehörenden Teil (23) des Transportwagens (1) befindet und daß die durch die Einrichtung (17) auf das Rastteil (22) einwirkende Kraft in horizontaler Richtung verläuft.

## Beschreibung

Die Erfindung betrifft einen von Hand bewegbaren Transportwagen, der mit wenigstens drei Lenkrollen ausgestattet ist, wovon mindestens eine dieser Lenkrollen als Lenk-Bockrolle gestaltet ist, die eine auf dem Rücken ihrer Radgabel befindliche Einrichtung aufweist, die das in der Radgabel gelagerte Rad der Lenk-Bockrolle dann in Geradeausfahrt hält, wenn sich ein federbelastetes Rastteil der Einrichtung in Eingriff mit einer außerhalb der Einrichtung befindlichen Vertiefung befindet, wobei das Rastteil durch einen quer zur Geradeausfahrt gerichteten, auf den Transportwagen einwirkenden Druck aus der Vertiefung herausdrückbar ist, so daß sich die Radgabel der wenigstens einen Lenk-Bockrolle verschwenken läßt und wobei das Rastteil von selbst wieder in die Vertiefung einrastet, wenn das Rad erneut eine in Geradeausfahrt gerichtete Position einnimmt.

Als nächstliegender Stand der Technik beschreibt die FR 2 350 972 eine Lenk-Bockrolle, die für einen gattungsgemäßen Transportwagen bestimmt ist. Bei dieser Rolle weist die Einrichtung ein schräg nach oben gerichtetes, auf dem Rücken der Gabel der Lenk-Bockrolle angeschweißtes Rohrstück auf, in dem eine Druckfeder ein als Kugel gestaltetes Rastelement in eine Vertiefung drückt, die am oberen Abschnitt des Lagergehäuses der Lenk-Bockrolle vorgesehen ist. Aufgabe solcher Lenk-Bockrollen ist es, die Geradeausfahrt des Transportwagens zu stabilisieren und ein seitliches Abdriften des Transportwagens bis zu einer bestimmten, seitlich auf den Transportwagen einwirkenden Mindestkraft zu garantieren.
Es ist bekannt, Fahrrollen, die sich an als Einkaufswagen gestalteten Transportwagen befinden, mit sogenannten Abweisringen auszustatten, welche die Funktion von Stoßdämpfern erfüllen. Bei Lenk-Bockrollen gemäß der FR 2 350 972 ist dies nicht möglich, da deren schräg nach oben gerichtete Einrichtung das Aufsetzen eines Abweisringes nicht erlaubt.

Es ist Aufgabe der Erfindung, an einem gattungsgmäßen Transportwagen die wenigstens eine Lenk-Bockrolle so weiterzuentwickeln, daß auf dieser ein Abweisring aufsetzbar ist.

Die Aufgabe ist erfindungsgemäß dadurch gelöst, daß sich die Vertiefung in einem ortsfesten, nicht zur Lenk-Bockrolle gehörenden Teil des Transportwagens befindet und daß die durch die Einrichtung auf das Rastteil einwirkende Kraft in horizontaler Richtung verläuft.

Es ist von Vorteil, jenes Teil, in dem sich die Vertiefung befindet, als topfförmiges, zylindrisches Bauteil zu gestalten, welches das obere Lagergehäuse oder den oberen zylindrischen Abschnitt der Lenk-Bockrolle abdeckt und beispielsweise als eigenständiges Bauteil zwischen dem Fahrgestell des Transportwagens und der Lenk-Bockrolle ortsfest und gegen Verdrehen gesichert angeordnet ist. Um nun einen Abweisring auf das topfförmige Teil aufsetzen zu können, ist die am Rücken der Radgabel befindliche Einrichtung horizontal sich erstreckend so angeordnet, daß auch die durch eine Druckfeder erzeugte, auf das Rastteil einwirkende Kraft ebenfalls horizontal verläuft, so daß die Einrichtung wenig in die Höhe baut und somit genügend Platz für einen Abweisring läßt.

Die Erfindung wird anhand eines Ausführungsbeispieles näher erläutert. Es zeigt
Fig. 1 einen als Einkaufswagen gestalteten Transportwagen sowie
Fig. 2 eine an einem Träger des Transportwagens montierte Lenk-Bockrolle.

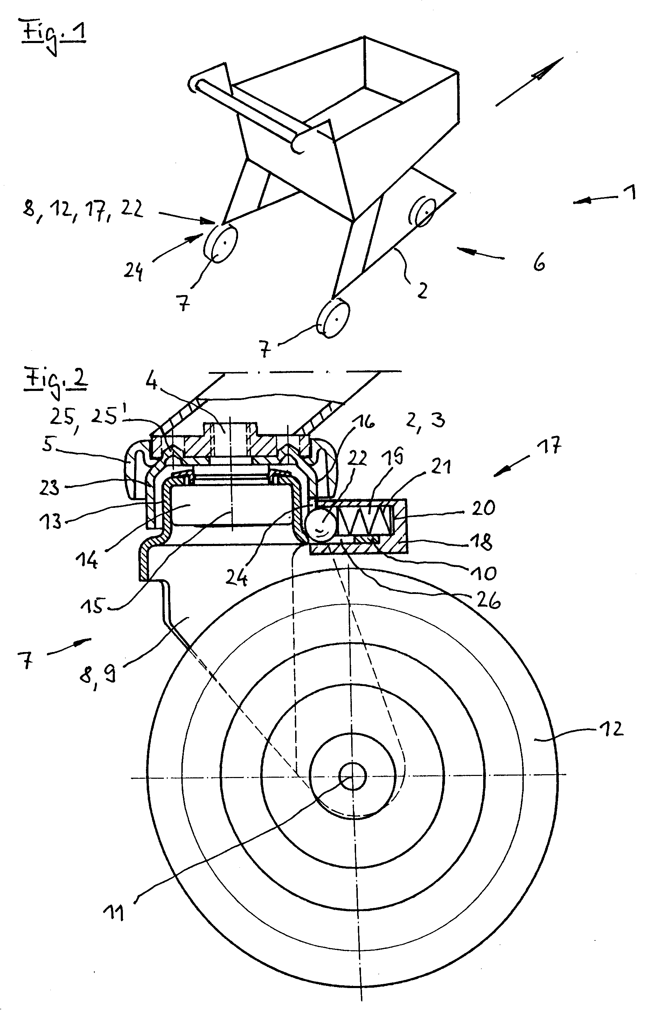

In Fig. 1 ist ein als Einkaufswagen gestalteter Transportwagen 1 dargestellt, der stellvertretend steht für alle möglichen gängigen Transportwagen 1, die für die Verwirklichung des erfindungsgemäßen Gedankens geeignet sind. Wichtig ist, daß das Fahrgestell 2 des Transportwagens 1 wenigstens drei Lenkrollen 6 aufweist, wovon mindestens eine dieser Lenkrollen 6 als Lenk-Bockrolle 7 gestaltet ist. Im Beispiel weist der Transportwagen 1 vorne zwei Lenkrollen 6 und hinten zwei Lenk-Bockrollen 7 auf. Die Lenk-Bockrollen 7 sind in bekannter Weise mit einer Einrichtung 17 ausgestattet, siehe Fig. 2 und 3, die das in der Radgabel 8 gelagerte Rad 12 einer jeden Lenk-Bockrolle 7 dann in Geradeausfahrt hält, wenn sich ein federbelastetes Rastteil 22 der Einrichtung 17 in Eingriff mit einer außerhalb der Einrichtung 17 befindlichen Vertiefung 24 befindet, wobei jedes Rastteil 22 durch einen quer zur Geradeausfahrt gerichteten, auf den Transportwagen 1 einwirkenden Druck aus der Vertiefung 24 herausdrückbar ist, so daß sich die Radgabeln 8 der beiden Lenk-Bockrollen 7 verschwenken lassen und wobei die Rastteile 22 von selbst wieder in die Vertiefungen 24 einrasten, wenn beide Räder 12 erneut eine in Geradeausfahrt gerichtete Position einnehmen.

Die in Fig. 2 dargestellte, an einem Träger 3 des Fahrgestelles 2 angeschraubte Lenk-Bockrolle 7 weist eine Radgabel 8 auf, die ein auf einer horizontalen Achse 11 drehbar an den Gabelschenkeln 9 gelagertes Rad 12 trägt. Die Radgabel 8 mündet in ein oberhalb gelegenes Lagergehäuse 13, in dem ein Kugellager 14 angeordnet ist. Das Lagergehäuse 13 und das Kugellager 14 befinden sich auf einer senkrechten Achse 15, so daß sich die Radgabel 8 mit dem Rad 12 um die senkrechte Achse 15 verschwenken läßt. So gestaltet liegt bis hierher eine typische Lenkrolle 6 vor, wie sie z.B. in der DE 25 43 211 C 2 beschrieben ist. Zwischen einem zum Fahrgestell 2 gehörenden, mit diesem ortsfest verbundenen Anschraubteil 4 und der Lenk-Bockrolle 7 ist ein topfförmiges Teil 23 lösbar angeordnet, das mit Erhöhungen 25 in Vertiefungen 25' eingreift, die am Anschraubteil 4 vorgesehen sind. Durch diese Maßnahme ist das topfförmige Teil 23, das koaxial zum oberen Lagergehäuse 13 und zum Kugellager 14 angeordnet ist, ortsfest und gegen Verdrehen gesichert am Fahrgestell 2 angeordnet. Auf einem die Gabelschenkel 9 verbindenden, horizontal angeordneten Rücken 10 ist die Einrichtung 17 ortsfest angeordnet. Die Einrichtung 17 weist ein Gehäuse 18 auf, das mit einem zum topfförmigen Teil 23 hin geöffneten, horizontal sich erstreckenden Raum 19 ausgestattet ist. Im Raum 19 befindet sich eine am Boden 20 des Raumes 19 sich abstützende Druckfeder 21, an die sich ein Rastteil 22 in Form einer Kugel anschließt. Das Rastteil 22 ragt teilweise aus dem Raum 19 heraus und befindet sich in Eingriff mit einer Vertiefung 24, die sich am topfförmigen Teil 23 befindet. Als Vertiefung 24 gilt auch ein Einschnitt, eine Nut oder ähnliches. Die Druckfeder 21 ist unter Vorspannung im Raum 19 eingefügt, so daß das Rastteil 22 federbelastet gegen oder in die Vertiefung 24 gedrückt wird. Die dabei auf das Rastteil 22 einwirkende Kraft verläuft in horizontaler Richtung. Auf diese Weise kann die Einrichtung 17 sehr niedrig gehalten werden. Sie ragt nicht, wie in Fig. 5 und 6 der FR 2 350 972 gezeigt, schrägt nach oben. Dadurch läßt sich auf das topfförmige Teil 23 ein bekannter Abweisring 5 koaxial aufsetzen, der gegenüber dem Anschraubteil 4 und dem topfförmigen Teil 23 sogar um die senkrechte Achse 15 verschwenkbar angeordnet sein kann, wobei die Einrichtung 17 unterhalb des Abweisringes 5 angeordnet ist. Ist oder sind die Rastteile 22 der wenigstens einen Lenk-Bockrolle 7 in den Vertiefungen 24 eingerastet, so sind die Räder 12 der Lenk-Bockrollen 7 in Geradeausfahrt, siehe Pfeil in Fig. 1, ausgerichtet. Läßt man nun eine quer zur Geradeausfahrt gerichtete Kraft, beispielsweise an der Schiebeeinrichtung des Transportwagens 1 angreifen, so rastet bei einer bestimmten Mindestkraft das Rastteil 22 der wenigstens einen Lenkrolle 7 aus der Vertiefung 24 aus, so daß sich die Radgabel 8 und damit die Lenk-Bockrolle 7 um die senkrechte Achse 15 so weit verschwenken läßt, bis das an der zylindrischen Mantelfläche 16 des Lagergehäuses 13 abrollende oder sich abstützende Rastteil 22 wieder die Vertiefung 24 erreicht und durch die Wirkung der Druckfeder 21 erneut in die Vertiefung 24 einrastet. Beim Ausrasten des Rastteiles 22 wird die Druckfeder 21 stärker zusammengepreßt.
Anstelle einer Lenk-Bockrolle 7, bei der die Radgabel 8 und das Lagergehäuse 13 aus einem einzigen Blechzuschnitt und damit als einteiliges Formteil gestaltet ist, können als Lenk-Bockrollen 7 in bekannter Weise auch solche Rollen vorgesehen sein, bei denen das obere Lagergehäuse 13 und die Radgabel 8 als zwei getrennte Teile gestaltet sind, die lediglich durch die gemeinsamen Rollelemente verbunden sind. Eine Rolle, die diese Merkmale besitzt, ist beispielsweise in der DE 33 35 272 A 1 beschrieben. Auch derart gestaltete Rollen weisen einen die Gabelschenkel 9 verbindenden, horizontalen Rücken 10 auf, an dem sich die Einrichtung 17 befestigen läßt, wobei ein ebenfalls das obere Lagergehäuse 13 von oben her umfassendes topfförmiges Teil 23 lösbar zwischen der Lenk-Bockrolle 7 und dem Fahrgestell 2 des Transportwagens 1 vorgesehen ist. Unabhängig davon, für welche der beiden Rollenkonstruktionen man sich entscheidet, kann das topfförmige Teil 23 auch unlösbarer Bestandteil des Fahrgestelles 2, beispielsweise an diesem angeschweißt sein. Ferner kann am Rücken 10 der Lenk-Bockrolle eine parallel zur Längserstreckung des Raumes 19 verlaufende Nut 26 oder Vertiefung vorgesehen sein, in welcher das Rastteil 22 geführt ist.

## Patentansprüche

1. Von Hand bewegbarer Transportwagen (1), der mit wenigstens drei Lenkrollen (6) ausgestattet ist, wovon mindestens eine dieser Lenkrollen (6) als Lenk-Bockrolle (7) gestaltet ist, die eine auf dem Rücken (10) ihrer Radgabel (8) befindliche Einrichtung (17) aufweist, die das in der Radgabel (8) gelagerte Rad (12) der Lenk-Bockrolle (7) dann in Geradeausfahrt hält, wenn sich ein federbelastetes Rastteil (22) der Einrichtung (17) in Eingriff mit einer außerhalb der Einrichtung (17) befindlichen Vertiefung (24) befindet, wobei das Rastteil (22) durch einen quer zur Geradeausfahrt gerichteten, auf den Transportwagen (1) einwirkenden Druck aus der Vertiefung (24) herausdrückbar ist, so daß sich die Radgabel (8) der wenigstens einen Lenk-Bockrolle (7) verschwenken läßt und wobei das Rastteil (22) von selbst wieder in die Vertiefung (24) einrastet, wenn das Rad (12) erneut eine in Geradeausfahrt gerichtete Position einnimmt, dadurch **gekennzeichnet,** daß sich die Vertiefung (24) in einem ortsfesten, nicht zur Lenk-Bockrolle (7) gehörenden Teil (23) des Transportwagens (1) befindet und daß die durch die Einrichtung (17) auf das Rastteil (22) einwirkende Kraft in horizontaler Richtung verläuft.

2. Von Hand bewegbarer Transportwagen nach Anspruch 1, dadurch **gekennzeichnet,** daß das die Vertiefung (24) aufweisende Teil (23) topfförmig gestaltet ist und das Lagergehäuse (13) der Lenk-Bockrolle (7) von oben her umfaßt.

3. Von Hand bewegbarer Transportwagen nach Anspruch 1 oder 2, dadurch **gekennzeichnet,** daß die Einrichtung (17) ein Gehäuse (18) aufweist, das mit einem horizontal sich erstreckenden, zum topfförmigen Teil (23) hin geöffneten Raum (19) zur Aufnahme einer Druckfeder (21) und des Rastteiles (22) ausgestattet ist.

4. Von Hand bewegbarer Transportwagen nach einem der Ansprüche 1 bis 3, dadurch **gekennzeichnet,** daß die Vertiefung (24) als Nut oder Einschnitt gestaltet ist.

5. Von Hand bewegbarer Transportwagen nach einem der Ansprüche 1 bis 4, dadurch **gekennzeichnet,** daß sich beim Verschwenken der Lenk-Bockrolle (7) das Rastteil (22) an der Mantelfläche (16) des Lagergehäuses (13) abstützt.

6. Von Hand bewegbarer Transportwagen nach einem der Ansprüche 1 bis 5, dadurch **gekennzeichnet,** daß das Rastteil (22) zusätzlich in einer am Rücken (10) der Radgabel (8) befindlichen Nut (26) oder Vertiefung geführt ist.

7. Von Hand bewegbarer Transportwagen nach einem der Ansprüche 1 bis 6, dadurch **gekennzeichnet,** daß das topfförmige Teil (23) entweder lösbar zwischen der Lenk-Bockrolle (7) und dem Fahrgestell (2) angeordnet oder unlösbarer Bestandteil des Fahrgestelles (2) ist.
